# FASCICULE DE BREVET EUROPEEN

(11) **EP 1 644 100 B1**
(45) Date de publication et mention de la délivrance du brevet: **25.06.2014**
(21) Numéro de dépôt: 04767863.6
(22) Date de dépôt: 30.06.2004
(51) Int. Cl.: B01D 46/00, B01D 46/02, B01D 46/06, B01D 46/24

(54) **INSTALLATIONS DE FILTRATION D AIR DU TYPE A MANCHES FILTRANTES**
LUFTFILTEREINHEITEN DER SCHLAUCHFILTER UMFASSENDEN ART
AIR FILTRATION UNITS OF THE TYPE COMPRISING FILTRATION BAGS

(30) Priorité: 04.07.2003 FR 0308217
(43) Date de publication de la demande: 12.04.2006
(73) Titulaire: Cattin Filtration, 25150 Pont de Roide (FR)
(72) Inventeur: REGNIER, Philippe, F-25230 Seloncourt (FR)
(74) Mandataire: Martin, Didier Roland Valéry
(86) Numéro de dépôt international: PCT/FR2004/050301
(87) Numéro de publication internationale: WO 2005/005021

(56) Documents cités:
- EP-A- 0 529 225
- WO-A-98/36819
- DE-C- 345 918
- FR-A- 1 374 945
- GB-A- 485 039
- GB-A- 1 532 302
- US-A- 2 981 368
- US-A- 4 003 727
- US-A- 4 056 374
- US-A- 4 244 718
- US-A- 4 339 251
- US-A- 4 813 985
- US-A- 5 061 303

## Description

La présente invention a pour objet un perfectionnement aux installations de filtration d'air du type à manches filtrantes. Elle concerne également un procédé de montage d'une manche de filtrage au sein de l'installation, ainsi qu'un outil de mise en tension desdites manches adapté à ladite installation.

Des installations de ce genre sont décrites par exemple dans les documents EP-0 343 061, FR-2 514 669, US-4 339 251**,** US-4 244 718 **et** FR-1 374 945. Les appareillages correspondants assurent l'extraction d'éléments en suspension dans une atmosphère puisée de locaux particuliers, par exemple dans des locaux de production, de traitement ou de stockage de produits pulvérulents, ou de certaines industries entraînant l'émission de déchets, tels que des sciures ou des copeaux très volatiles.

Ces appareillages sont classiquement constitués de trois éléments principaux généralement centrés sur un même axe vertical :
- un corps supérieur, cylindrique ou tronconique, dans lequel s'effectue l'arrivée tangentielle de l'air à dépoussiérer,
- une chambre de sédimentation, en forme d'entonnoir ou cylindrique, disposée sous le corps supérieur ; cette chambre est munie de moyens de reprise des déchets à sa partie inférieure, et
- une cartouche filtrante constituée de manches de filtration verticales qui s'étendent entre ladite chambre de sédimentation et la coiffe de l'appareil où l'air filtré est évacué.

Les manches de filtration correspondantes ont une forme générale cylindrique et elles sont classiquement réalisées en matériau du genre feutre aiguilleté. Ces manches sont tendues verticalement au sein de la cartouche filtrante entre deux structures supports adaptées : leurs extrémités inférieures sont solidarisées sur une structure support inférieure, par exemple en forme de grille, qui est située au-dessus de la chambre de sédimentation, et qui permet l'accès de l'air vicié sur le côté extérieur des manches filtrantes ; leurs extrémités supérieures sont solidarisées sur une structure support supérieure, généralement en forme de plateau à ouvertures circulaires, pour permettre l'évacuation de l'air filtré.

Le montage de chaque manche filtrante au sein de ce genre d'installation est décrit par exemple dans le document US-4 244 718. Ce montage consiste tout d'abord à solidariser l'extrémité supérieure des manches au niveau de l'une des ouvertures du plateau supérieur ; cette solidarisation est traditionnellement obtenue au moyen d'un organe intégré en forme d'anneau déformable (de type « *snap ring* »)-L'extrémité inférieure des manches est ensuite fixée sur la structure support inférieure ; des moyens appropriés sont prévus au niveau de cette extrémité inférieure pour assurer la mise en tension de chaque manche.

En raison de la structure des installations de filtration actuelles, l'opérateur doit accéder à la structure support inférieure pour effectuer la plupart des opérations de montage et de maintenance relatives aux manches filtrantes.
Or, les interventions correspondantes ne sont pas très pratiques à réaliser à cause des faibles encombrements rencontrés. De plus, elles sont réalisées dans des ambiances poussiéreuses et sales ; en outre, elles ne sont pas sans danger pour l'opérateur du fait des poussières en présence, en particulier dans le cadre d'équipements traitant des atmosphères à caractéristiques explosives ou inflammables.

La présente invention vise à remédier à ces inconvénients en proposant une installation de filtration d'air dont la structure originale facilite les opérations de montage et de maintenance pour le personnel d'intervention.

L'installation de filtration d'air, conforme à l'invention, est du type de celle décrite ci-dessus en ce qu'elle comporte une cartouche filtrante constituée de manches de filtrage tendues verticalement ; elle se caractérise par le fait que les moyens de fixation haut et bas des manches filtrantes sont adaptés pour permettre un réglage de la tension de chaque manche au niveau de leur extrémité supérieure. **L'installation selon l'invention est conforme à l'objet de la revendication 1.**

L'opérateur peut en conséquence effectuer la plupart des opérations de montage et de maintenance au niveau de la structure support supérieure des manches, ceci dans une ambiance sécurisée et peu polluée.

Selon une disposition particulière de l'invention, les moyens de fixation de l'extrémité supérieure des manches de filtrage, au niveau de la structure support supérieure, consistent en un organe rapporté en forme d'anneau déformable ; cet organe rapporté est destiné à venir se positionner au sein des manches une fols celles-ci fixées sur la structure support inférieure, et tendues, de sorte à maintenir lesdites manches dans cet état tendu par serrage contre le contour des ouvertures de la structure support supérieure.

De préférence, l'anneau déformable rapporté correspondant comporte une rainure annulaire s'étendant sur son contour externe, destinée à venir s'encastrer sur le contour interne des ouvertures de la structure support supérieure, de façon à serrer les manches contre ces ouvertures.

De préférence encore, l'extrémité supérieure des manches de filtrage est munie d'un élément structurel destiné à faciliter leur préhension, manuellement ou mécaniquement, en vue notamment d'assurer leur tension.
Selon une forme particulière de réalisation, l'élément structurel correspondant se présente sous la forme d'un collet rigide intégré dans la structure de la manche.

Les manches de filtrage peuvent présenter une section circulaire constante sur toute leur longueur ; selon une variante de réalisation, elles peuvent comporter une portion d'extrémité supérieure de forme générale tronconique, avec un collet rigide d'extrémité de diamètre supérieur à celui des ouvertures du plateau.
Cette particularité permet le passage plus aisé des manches à travers les ouvertures de la structure support supérieure, à partir de la coiffe de l'appareil, tout en évitant toute chute accidentelle de l'ensemble de la manche dans la cartouche filtrante.

Selon une autre disposition de l'invention, l'extrémité inférieure des manches de filtrage est dotée d'une coupelle de fond, munie d'une tige saillante comportant un élément d'accrochage ; cet élément d'accrochage est destiné à coopérer avec un profilé support de conformation adaptée, aménagé au niveau de la structure support inférieure.

De préférence, la structure support inférieure comporte au moins un profilé support, en forme de tôle pliée, constitué d'une partie centrale s'étendant à la verticale, et dont l'extrémité supérieure est prolongée par un élément de retour s'étendant sur toute sa longueur. L'élément de retour correspondant est muni de plusieurs fentes ouvertes assurant chacune le passage d'une tige d'accrochage de manche et le positionnement de l'élément d'accrochage de ladite tige.

De préférence encore, l'extrémité supérieure du ou des profilés supports comporte un élément de retour constitué de deux parties formant un dièdre. L'une desdites parties, dénommée « *partie horizontale* », s'étend à l'équerre ou sensiblement à l'équerre à partir de l'extrémité supérieure de la partie centrale du profilé support ; l'autre desdites parties, dénommée « *partie inclinée »* s'étend en biais vers le bas. Cet élément de retour est muni d'une pluralité de fentes ouvertes assurant pour chacune le passage d'une tige d'accrochage de manche, l'élément d'accrochage de ladite tige étant destiné à venir se positionner sous la partie horizontale précitée.

La présente invention a également pour objet un outil particulier de mise en tension de manches filtrantes, pour une installation de filtration d'air telle que décrite ci-dessus, **ledit outil selon l'invention étant conforme à l'objet de la revendication 15.**

L'outil de mise en tension correspondant comporte :
- un élément d'embase destiné à se positionner sur la structure support supérieure de l'installation,
- un moyen de traction de j'extrémité supérieure d'une manche de filtrage, et
- un moyen de manoeuvre du moyen de traction.

De préférence, les moyens de manoeuvre en question assistent mécaniquement le pilotage du moyen de traction.
Le moyen de manoeuvre consiste alors avantageusement en au moins un dispositif de type ressort à gaz, vérin pneumatique ou hydraulique ; ce ou ces moyens de manoeuvre sont agencés entre l'élément d'embase et le moyen de traction, de façon à permettre la manoeuvre assistée de ce dernier lors de leur déploiement.

Encore selon une forme particulière de réalisation, le moyen de traction consiste en un élément en forme générale de U, destiné à venir se positionner sous un élément en forme de collet aménagé au niveau de l'extrémité supérieure des manches.

La présente invention a encore pour objet un procédé de montage particulier d'une manche de filtrage au sein de l'installation de filtration d'air, objet de l'invention, **ledit procédé étant conforme à l'objet de la revendication 19.** Ce procédé consiste principalement :
- à fixer l'extrémité inférieure de la manche de filtrage, par un moyen de fixation approprié, sur la structure support inférieure,
- à mettre en tension la manche de filtrage par une traction verticale vers le haut, et
- à fixer l'extrémité supérieure de la manche de filtrage sur la structure support supérieure par un moyen de fixation adapté.

D'autre part, l'invention concerne également une manche filtrante particulière, **conforme à l'objet de la revendication 20,** adaptée pour équiper l'installation de filtration d'air décrite ci-avant, laquelle manche comporte un organe de crochetage à son extrémité inférieure, et un élément structurel destiné à faciliter sa préhension au niveau de son extrémité supérieure. L'élément structurel en question peut se présenter sous la forme d'un collet rigide. Selon une forme de réalisation particulière, la partie supérieure de cette manche filtrante présente une forme générale tronconique délimitée par deux collets rigides, le collet rigide supérieur présentant un diamètre supérieur à celui du collet rigide inférieur.
Mais l'invention sera encore illustrée, sans être aucunement limitée, par la description suivante d'une forme particulière de réalisation d'une installation de filtration d'air conforme à l'invention, donnée uniquement à titre indicatif, et illustrée par les dessins annexés dans lesquels :
- la figure 1 est une élévation schématique d'une installation de filtration d'air du type à manches filtrantes, conforme à l'invention ;
- la figure 2 est une vue en perspective d'une partie de l'installation de la figure 1, détaillant les moyens de fixation de l'extrémité inférieure d'une manche filtrante sur la structure support inférieure ;
- la figure 3 est une vue de côté détaillant encore les moyens de fixation de l'extrémité inférieure d'une manche filtrante sur la structure support inférieure ;
- les figures 4A, 4B et 4C illustrent de manière schématique les principales étapes pour solidariser l'extrémité supérieure d'une manche sur la structure support supérieure ;
- la figure 5 est une vue de côté montrant une variante de réalisation des manches filtrantes ;
- la figure 6 est une vue en perspective d'un outil adapté pour la mise en tension des manches filtrantes ;
- les figures 7A, 7B et 7C sont des vues schématiques qui illustrent l'outil de mise en tension illustré sur la figure 6, selon les principales conformations pour tendre une manche filtrante conforme à l'invention.

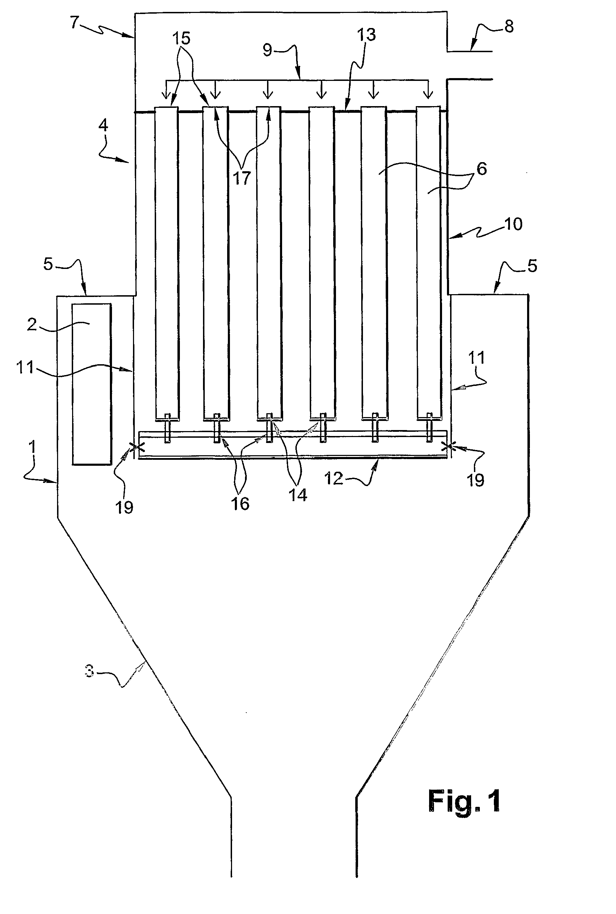

L'installation de filtration d'air représentée en élévation schématique sur la figure 1, comporte des éléments de forme circulaire qui sont centrés sur un même axe vertical, à savoir principalement :
- un corps supérieur 1, en forme de virole cylindrique, doté d'une arrivée tangentielle 2 de l'air à dépoussiérer ;
- une chambre de sédimentation 3, ici de forme tronconique, disposée dans le prolongement et sous le corps supérieur 1 ; cette chambre 3 comporte en partie basse des moyens non représentés de reprise des particules et/ou poussières, qui s'y déposent ;
- une cartouche filtrante 4, solidaire du corps supérieur 1 au moyen d'une collerette annulaire 5 ; cette cartouche filtrante 4 comporte un ensemble de manches filtrantes 6, par exemple en matériau du genre feutre aiguilleté, dotées éventuellement de plusieurs anneaux de renfort agencés sur leur longueur.

La cartouche filtrante 4 correspondante s'étend par exemple sensiblement pour moitié dans le corps supérieur 1, et pour l'autre moitié au-dessus de ce même corps 1. La partie supérieure de la cartouche filtrante 4 comporte une coiffe 7, munie d'une ouverture 8 assurant l'évacuation de l'air filtré ; cette coiffe 7 peut être équipée d'un dispositif de décolmatage automatique 9, classique, bien connu dans le domaine technique concerné.

Cette cartouche filtrante 4, est délimitée latéralement, au-dessus du corps supérieur 1, par une paroi ou enveloppe cylindrique 10 ; elle est délimitée dans sa partie inférieure, au niveau du corps supérieur 1, par une enveloppe 11 en forme de jupe qui est destinée à former un écran pour protéger la partie basse des manches 6 disposées au niveau de l'arrivée tangentielle 2 de l'air à dépoussiérer.

La cartouche 4 est encore délimitée par deux structures supports, l'une inférieure 12 et l'autre supérieure 13, entre lesquelles sont maintenues tendues verticalement les manches filtrantes 6.

La structure support inférieure 12 se présente sous la forme générale d'une grille ; elle est située au-dessus de la chambre de sédimentation 3 et elle est maintenue en position par des fixations 19 solidaires de la partie inférieure de la jupe 11. La structure support supérieure 13 se présente quant à elle sous la forme d'un plateau doté d'une pluralité d'ouvertures circulaires ; elle est disposée au niveau de la partie supérieure de l'enveloppe cylindrique 10, fixée de manière appropriée.

Les extrémités inférieure 14 et supérieure 15 des manches filtrantes 6, sont solidarisées respectivement avec les structures supports 12 et 13 par des moyens de fixation repérés 16 et 17.

Conformément à l'invention, ces moyens de fixation 16 et 17 sont adaptés pour permettre la mise en tension des manches 6 au niveau de leurs extrémités supérieures 15.

Les moyens de fixation et de mise en tension précités, permettent une cinématique particulière de montage des manches de filtrage 6 au sein de la cartouche filtrante 4. En effet, chacune des manches 6 peut être montée dans l'installation selon la procédure suivante :
- tout d'abord, l'extrémité inférieure 14 de la manche 6 est solidarisée avec la structure support inférieure 12 par l'intermédiaire des moyens de fixation 16 associés ;
- cette manche 6 est ensuite mise en tension par une traction verticale vers le haut exercée sur son extrémité supérieure 15 ;
- la manche 6 maintenue tendue est enfin solidarisée avec l'une des ouvertures du plateau 13 par l'activation des moyens de fixation associés 17.

Pour le démontage des manches 6, l'opérateur doit tout simplement désactiver successivement les moyens de fixation 16 et 17, selon un ordre approprié à la situation.

Les moyens de fixation 16, pour ta solidarisation de l'extrémité inférieure 14 des manches 6, sont adaptés pour pouvoir être activés par un opérateur positionné au niveau de la structure support supérieure 13 ; et la mise en tension des manches peut aussi être réalisée au niveau de la structure support supérieure 13.
En conséquence, le personnel d'intervention peut alors effectuer l'ensemble des opérations de maintenance, et notamment de montage/démontage des manches 6, à partir de ladite structure support supérieure 13, ceci dans une ambiance propre ou tout au moins peu polluée.

Bien entendu, l'accès pour l'opérateur à ce plateau supérieur 13 peut être obtenu par tout moyen approprié. Cet accès peut notamment consister en un trou d'homme, un capot bombé pivotant ou similaire, par exemple aménagé dans la coiffe supérieure 7.

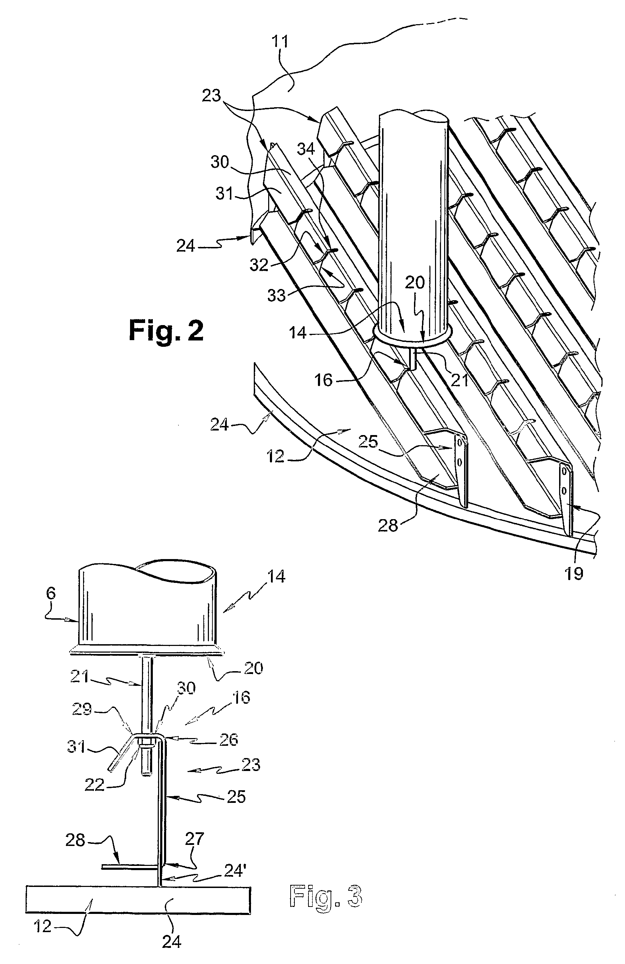

Une forme particulière de réalisation des moyens de fixation et de mise en tension des manches filtrantes 6 est représentée sur les figures 2 à 7.

Les moyens de fixation 16 de l'extrémité inférieure 14 des manches sur la structure inférieure 12 sont détaillés sur les figures 2 et 3 ; ils sont mis en oeuvre après avoir fait passer la manche 6 dans l'une des ouvertures du plateau supérieur 13.
Tout d'abord, on observe sur les figures 2 et 3 que l'extrémité inférieure 14 de la manche 6 est dotée d'une coupelle de fond 20, classique, munie d'une tige centrale 21 s'étendant axialement, et comportant à son extrémité un élément d'accrochage 22 ; cet élément d'accrochage 22 consiste ici en un élément de type écrou-frein, vissé sur un filetage aménagé sur l'extrémité de la tige 21.
Plus généralement, on peut envisager tout type de système d'accrochage particulier, genre crochet monobloc, structure d'endiquetage, aimant ou autre, aménagé à l'extrémité de la tige 21.

Comme on peut l'observer sur les figures 2 et 3, le structure support inférieure 12 est constituée d'une pluralité de profilés parallèles 23, fixés sur un renfort 24 aménagé à l'extrémité inférieure de la jupe 11 ; la fixation en question est réalisée au moyen des platines de liaison 19.
Les profilés supports 23 sont réalisés en tôle pliée ; ils sont chacun constitués d'une partie centrale verticale 25 délimitée par une bordure d'extrémité supérieure 26 et une bordure d'extrémité inférieure 27. La bordure d'extrémité inférieure 27 est prolongée sur toute sa longueur par un élément de retour 28 à l'équerre, pour améliorer la rigidité du profilé.
La bordure d'extrémité supérieure 26 est quant à elle munie d'un élément de retour supérieur 29, en forme de dièdre, constitué de deux parties repérées 30 et 31. La partie 30 s'étend à l'équerre à partir de l'extrémité 26 de la partie centrale 25, selon un plan horizontal ou sensiblement horizontal ; la partie 31 de l'élément de retour 29 prolonge de manière inclinée vers le bas la partie 30 précitée.
Tel qu'on peut l'observer sur la figure 2, l'élément de retour 29 présente plusieurs fentes ouvertes 32, s'étendant transversalement sur les deux parties 30 et 31 dudit élément de retour supérieur 29. L'extrémité 33 de chaque fente 32 présente une forme générale en Vé au niveau de l'ouverture ; l'autre extrémité 34 ne s'étend que partiellement sur la partie horizontale 30 de l'élément de retour 29.

L'élément d'accrochage 22 des manches 6 est destiné à coopérer avec l'une des fentes 32 aménagées sur les profilés supports 23.
Lors du montage d'une manche 6 sur le profilé support 23, la tige 21 est positionnée au niveau de l'extrémité évasée 33 de la fente 32 concernée, l'élément d'accrochage 22 étant disposé sous l'extrémité de la partie 31 du retour 29 ; la forme en Vé de cette extrémité 33 facilite l'insertion de la tige 21 dans la fente 32.
Il suffit ensuite pour l'opérateur d'exercer une traction vers le haut sur la manche 6 pour finaliser le positionnement, tel que l'on peut l'observer en détail sur la figure 3. En effet, la conformation inclinée de la partie 31 de l'élément de retour 29 permet un cheminement de l'élément d'accrochage 22 jusqu'à venir en position contre la face inférieure de la partie horizontale 30. De plus, cette partie inclinée 31 de l'élément de retour supérieur 29 forme une sorte de butée, destinée à maintenir en position l'élément d'accrochage 22 contre la partie horizontale 30, lorsque la manche 6 est maintenue tendue; cette partie inclinée 31 permet également d'empêcher la désolidarisation de l'élément d'accrochage 22 en cas de légère détente de la manche 6.

Pour désactiver la fixation de l'extrémité inférieure 14 sur la structure support inférieure 12, il suffit pour l'opérateur de supprimer la tension exercée sur la manche 6 et de désengager la tige 21 de la fente ouverte 32.

Comme on l'a indiqué ci-dessus, l'opération d'accrochage correspondante peut être réalisée à partir de la zone supérieure de la cartouche 4, au niveau de la coiffe 7. Pour cela, l'opérateur maintient l'extrémité supérieure 18 de la manche 6 et effectue un léger balancement de cette manche de sorte à positionner l'élément d'accrochage 22 dans l'une des fentes 32. On comprend bien alors que la fixation de l'extrémité inférieure des manches 6 sur la structure support inférieure 12 s'effectue très simplement et sans nécessiter d'outillage particulier.

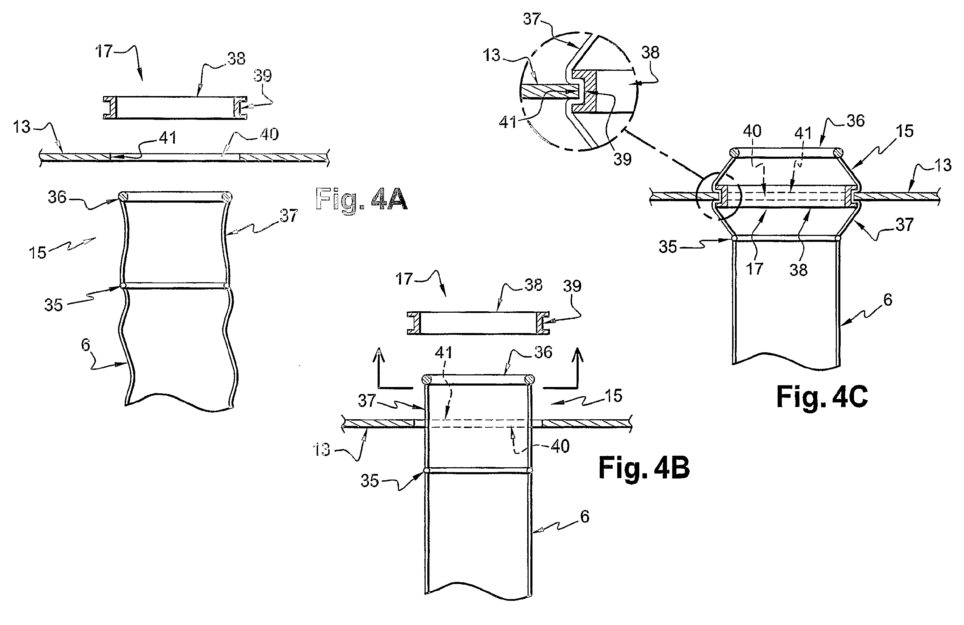

Une fois l'extrémité inférieure de la manche 6 fixée, le montage de ladite manche 6 se poursuit par sa mise en tension et par la fixation de son extrémité supérieure 15 sur le plateau à ouvertures 13. Les moyens de fixation 17 correspondants sont détaillés sur les figures 4A à 4C.

Tout d'abord, sur ces figures 4A à 4C, on observe que l'extrémité supérieure 15 de la manche 6 est munie de deux collets rigides, l'un inférieur 35 et l'autre supérieur 36, délimitant une portion d'extrémité supérieure cylindrique 37, au niveau de laquelle sont destinés à se positionner les moyens de fixation 17 ; ces collets rigides 35 et 36 sont en forme de bagues en matière plastique ou métallique intégrées dans la structure de la manche 6, par exemple dans des fourreaux cousus.
Les moyens de fixation 17 se présentent sous la forme d'un anneau déformable rapporté 38, de type « snap ring », dont le contour externe est munie d'une rainure annulaire 39 ; cet organe 38 est destiné à assurer le serrage et le maintien de la portion d'extrémité supérieure 37 de manche 6 sur le plateau à ouvertures 13, comme cela sera décrit plus en détail ci-dessous.
Après avoir positionné l'extrémité supérieure 15 de la manche 6 dans l'ouverture 40 concernée du plateau 13 (figure 4B), ladite manche 6 est tendue par une traction vers le haut ; le montage est finalisé par le positionnement de l'organe annulaire 38 au sein de la manche 6 tendue, comme illustré sur la figure 4C.
Pour cela, on positionne l'organe flexible annulaire 38 à l'intérieur de la portion d'extrémité supérieure 37 de la manche 6, de sorte que la gorge annulaire 39 vienne se placer sur le contour 41 de l'orifice 40 ; une zone circulaire de la portion d'extrémité supérieure 37 de la manche 6 est alors serrée ou pincée entre ledit organe déformable 38 et le contour 41 de l'orifice 40 du plateau 13. Les caractéristiques de flexibilité de l'organe annulaire 38 sont adaptées pour obtenir un serrage et un maintien optimum de l'extrémité supérieure de la manche 6 tendue.
Ce type de solidarisation assure une étanchéité efficace entre la manche 6 et le plateau à ouvertures 13 ; cela empêche encore les risques de rotation de la manche 6. De plus, le contact intime entre la manche 6 et le plateau à ouvertures 13 assure une conductibilité électrostatique efficace, permettant de diminuer les risques de décharge électrostatique sans nécessiter l'utilisation de tresses de conductibilité.

On comprend bien par cette description, en relation avec les figures 2 à 4, que le montage et le démontage des manches filtrantes 6, au sein de la cartouche, peut se faire de manière rapide et simple à partir de la coiffe supérieure 7.
Plus généralement, les moyens de fixation 16 et 17 des manches 6 sont adaptés pour permettre la mise en tension desdites manches par action uniquement sur leur extrémité supérieure 15, sans avoir à mener d'action sur leur extrémité inférieure 14, contrairement aux installations de ce genre connues de l'état de la technique.

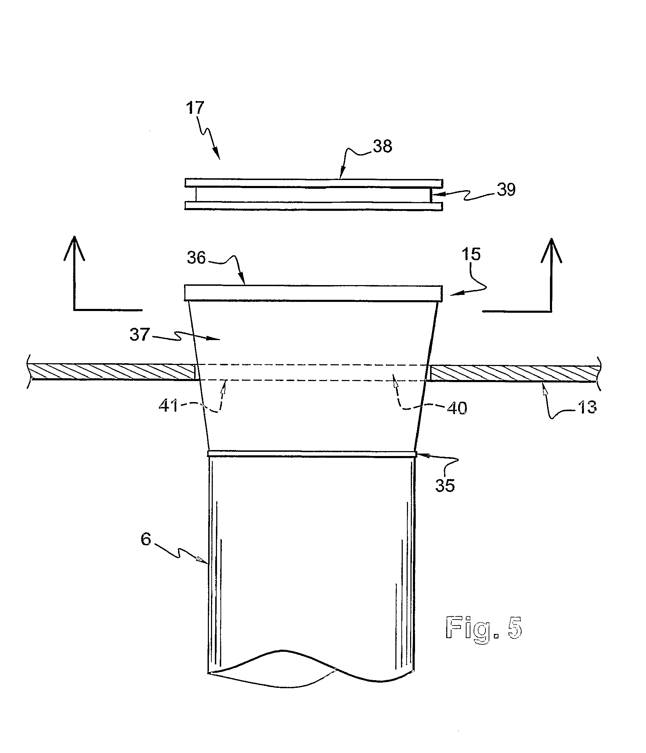

Selon une forme de réalisation dérivée, illusirée sur figure 5, la manche filtrante 6 peut comporter une portion d'extrémité supérieure 37, agencée entre les collets rigides 35 et 36, de forme générale tronconique. En l'espèce, le collet rigide supérieur 36 présente un diamètre supérieur par rapport à celui du collet rigide inférieur 35, mais aussi par rapport au diamètre des ouvertures 40 de la structure support supérieure 13 ; le reste de la longueur de ces manches, prolongeant le collet rigide inférieur 35, est cylindrique, de diamètre identique ou inférieur à celui des ouvertures 40 précitées.

Le montage d'une telle manche au sein de l'installation implique le passage de son extrémité inférieure au travers d'une ouverture 40 de la structure support supérieure 13, cela à partir de la coiffe supérieure 7.
Après fixation de son extrémité inférieure 14 sur la structure support 12, la manche 6 est tendue et fixée au niveau de sa portion d'extrémité supérieure 37 sur la structure support supérieure 13.
On comprend bien qu'en raison du diamètre particulier du collet rigide supérieur 36, l'opérateur effectuant le montage ou le démontage de ces manches ne risque pas de les faire tomber par accident en particulier dans la partie inférieure de la cartouche filtrante 4.

La mise en tension de la partie supérieure des manches filtrantes 6 peut se faire manuellement ou de manière assistée par un outillage approprié.

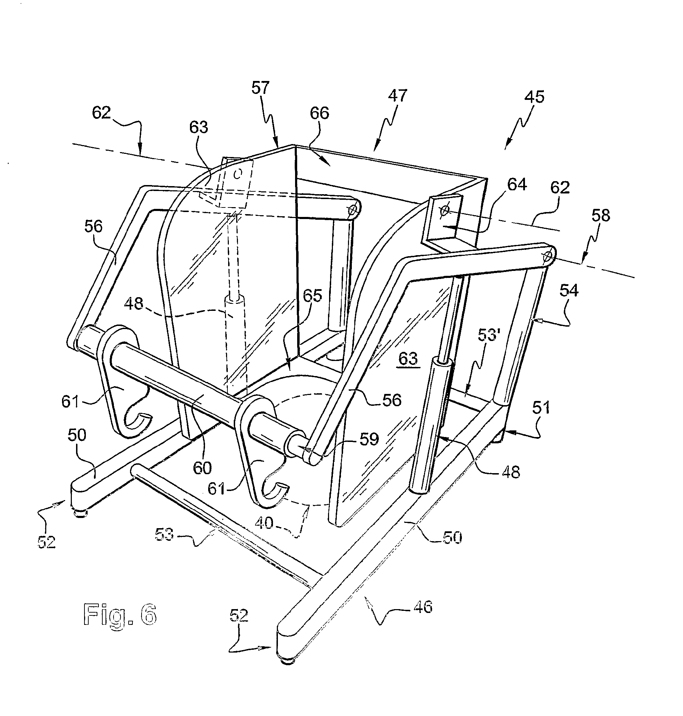

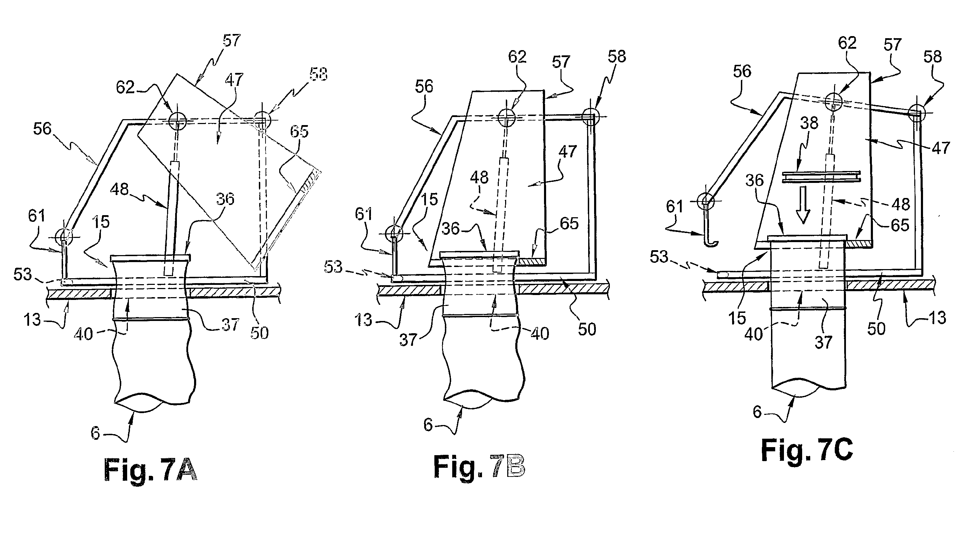

Une forme particulière de réalisation d'un moyen mécanique de mise en tension des manches est représentée sur les figures 6 et 7.

L'outil de mise en tension correspondant 45 (figure 6) est constitué des éléments principaux suivants :
- une embase 46, destinée à reposer sur le plateau à ouvertures 13,
- une structure de traction 47, adaptée pour coopérer avec l'extrémité supérieure 15 d'une manche 6, et
- un système de manoeuvre 48, destiné à assister le déplacement de la structure de traction 47.

L'embase 46 comporte deux longerons 50 qui s'étendent parallèlement l'un par rapport à l'autre, et dont les extrémités 51 et 52 sont reliées par des traverses 53, 53'. Les extrémités 51 de chacun des longerons 50 sont munies chacune d'un montant vertical 54, sur lequel est articulée la structure de traction 47.

Cette structure de traction 47 est ici constituée d'un ensemble de deux bras 56, supportant un organe de préhension 57 de la manche 6. L'une des extrémités de ces bras 56 est articulée selon un axe horizontal 58 sur les montants verticaux 54 ; l'autre extrémité de ces bras 56 est reliée par une traverse 59 sur laquelle s'articule un élément en forme de manchon 60 muni de deux structures de crochetage 61 ; ces deux crochets 61 sont agencés de sorte à pouvoir coopérer avec la traverse 53 aménagée du côté de l'extrêmité 52 des longerons 50.
L'organe de préhension 57 est articulé sur les bras 56, selon un axe 62 parallèle à l'axe d'articulation 58 précité. Cet organe de préhension 57 est constitué de deux parois latérales 63, coopérant avec les bras 56 par des pattes 64, reliées par un plancher 65 en forme générale de U ; de plus, une traverse 66 est aménagée entre les parois latérales 63 pour améliorer la rigidité d'ensemble.

On observe encore sur la figure 6 le système de manoeuvre 48 de la structure de traction 47, ici illustré sous la forme de deux ressorts à gaz ; ces ressorts à gaz 48 s'étendent chacun depuis un longeron 50 de l'élément d'embase 46 jusqu'au bras de manoeuvre 56 disposé en regard.

Les figures 7A à 7C illustrent l'utilisation de l'outil 45 en vue de la mise en tension d'une manche 6.

Comme on peut l'observer sur la figure 7A, l'outil de mise en tension 45 est tout d'abord positionné au niveau d'une ouverture 40 de la structure support supérieure 13 ; plus précisément, les longerons 50 de l'embase 46 sont positionnés de part et d'autre de l'ouverture 40 correspondante.
Les crochets 61 coopèrent avec la traverse 53, située du côté de l'extrémité 52 des longerons 50 ; les ressorts à gaz 48 du système de manoeuvre sont alors dans une position rétractée.
De plus, l'organe de préhension 57 est basculé autour de son axe 62, de sorte à libérer l'espace central et faciliter le passage de l'extrémité supérieure 15 de la manche 6 au travers de l'ouverture 40 équipée.

Une fois l'extrémité 15 de la manche 6 suffisamment tirée vers le haut manuellement, l'organe de préhension 57 est pivoté de sorte à venir dans sa position de repos, c'est-à-dire evec l'élément de plancher 65 à l'horizontale (figure 7B).
Lors de ce pivotement de l'organe de préhension 57 autour de l'axe 62, l'élément de plancher 65 en forme de U vient se positionner juste sous la face inférieure du collet 36.

La manche 6 est ensuite tendue par désactivation manuelle des crochets 61 (figure 7C). En effet, les ressorts à gaz 48 agissent en poussée et ils se déploient automatiquement ; cela provoque l'articulation des bras 56 autour de leur axe 58, et par conséquent un déplacement vertical ou sensiblement vertical vers le haut de l'organe de préhension 57.
Le collet supérieur 36 est alors tracté vers le haut, de quelques millimètres ou de quelques centimètres, de sorte à tendre correctement la manche 6.
Les ressorts à gaz 48 maintiennent la tension correspondante sans nécessiter d'intervention de l'opérateur ; ce dernier peut alors positionner l'anneau déformable 38 de sorte à serrer la portion supérieure 37 de la manche 6 contre le contour 41 de l'ouverture 40, tel que décrit précédemment en relation avec la figure 4C.

Pour séparer l'outil 45 de la manche 6, l'opérateur actionne vers le bas le manchon 60, de sorte à réactiver les crochets 61 ; il peut ensuite facilement faire pivoter l'organe de préhension 57 pour dégager le collet supérieur 36. L'outil 45 peut alors être déplacé au niveau d'une autre ouverture 40 pour tendre une autre manche.

Cet outil 45 permet d'assister l'opérateur dans la mise en tension des manches 6 ; une fois cet outil correctement positionné, l'opérateur doit seulement désactiver les crochets 61, et les ressorts à gaz 48 tendent automatiquement la manche. Lorsque cette manche 6 est tendue, l'opérateur peut se consacrer au positionnement de l'anneau de verrouillage 38 sans devoir intervenir sur le maintien de la tension de la manche.
La force des ressorts à gaz 48 sera adaptée pour procurer à chacune des manches une tension régulière et constante, par exemple de l'ordre de 40 kg.

On notera que les manches filtrantes de l'installation peuvent avoir des sections autres que circulaires, par exemple ovales ou polygonales ; la forme des ouvertures 40 du plateau supérieur 13 sera alors adaptée en conséquence.

## Revendications

1. Installation de filtration d'air, comportant une cartouche filtrante (4) du type à manches de filtrage, (6), lesquelles manches (6) sont disposées verticalement, et maintenues tendues par des moyens appropriés (16, 17) entre deux structures supports (12, 13), l'extrémité supérieure (15) desdites manches (6) étant fixée sur des ouvertures (40) aménagées dans une structure support supérieure (13) en forme de plateau à ouvertures, et l'extrémité inférieure (14) desdites manches (6) étant fixée sur une structure support inférieure (12), **caractérisée en ce qu'**elle comporte des moyens de fixation haut et bas (16, 17) des manches de filtrage (6) qui sont adaptés pour permettre la cinématique de montage suivante :
- l'extrémité inférieure (14) de chaque manche (6) est solidarisée avec la structure support inférieure (12) par l'intermédiaire des moyens de fixation bas (16) associés ;
- chaque manche (6) est ensuite mise en tension par une traction verticale vers le haut exercée sur leur extrémité supérieure (15),
- la manche (6) maintenue tendue est enfin solidarisée avec l'une des ouvertures (40) du plateau (13) par l'activation des moyens de fixation haut associés (17).

2. Installation selon la revendication 1 **caractérisée en ce que** les manches (6) sont solidarisées de façon étanche audit plateau à ouvertures.

3. Installation selon l'une quelconque des revendications 1 et 2 **caractérisée en ce qu'**elle comprend un corps supérieur (1) doté d'une arrivée tangentielle (2) de l'air à dépoussiérer.

4. Installation selon l'une des revendications 1 à 3 **caractérisée en ce que** l'extrémité supérieure (15) des manches (6) passe au travers desdites ouvertures (40).

5. Installation selon l'une des revendications 1 à 4 **caractérisée en ce que** les moyens de fixation (16) pour la solidarisation de l'extrémité inférieure (14) des manches (6) sont adaptés pour pouvoir être activés par un opérateur positionné au niveau de la structure support supérieure (13).

6. Installation selon l'une des revendications 1 à 5, **caractérisée en ce qu'**elle comporte des moyens de fixation (17) des manches de filtrage (6) au niveau de la structure support supérieure (13), du type organe rapporté (38) en forme d'anneau déformable, lequel organe rapporté (38) est destiné à venir se positionner au sein desdites manches (6) une fois celles-ci fixées sur la structure support inférieure (12), et tendues, de sorte à maintenir lesdites manches (6) dans cet état tendu par serrage contre le contour (41) des ouvertures (40) de ladite structure support supérieure (13).

7. Installation selon la revendication 6, **caractérisée en ce que** l'anneau déformable (38) comporte une rainure annulaire (39), aménagée sur son contour externe, destinée à venir s'encastrer sur le contour interne (41) des ouvertures (40) de la structure supérieure (13).

8. Installation selon l'une quelconque des revendications 6 ou 7, **caractérisée en ce qu'**elle comporte des manches de filtrage (6) dont l'extrémité supérieure (15) est munie d'un élément structurel (36) destiné à faciliter leur préhension, manuellement ou mécaniquement, en vue notamment d'assurer leur tension.

9. Installation selon la revendication 8, **caractérisée en ce qu'**elle comporte des manches de filtrage (6) dont l'extrémité supérieure (15) est munie d'un élément en forme de collet rigide (36) destiné à faciliter leur préhension en vue notamment d'assurer leur tension.

10. Installation selon la revendication 9, **caractérisé en ce qu'**elle comporte des manches de filtrage (6) dont la portion d'extrémité supérieure (37), délimitée par deux collets rigides et 36), présente une forme générale tronconique, le diamètre du collet rigide (36) d'extrémité étant supérieur au diamètre des ouvertures (40) du plateau (13).

11. Installation selon l'une quelconque des revendications 1 à 10, **caractérisée en ce qu'**elle comporte des manches de filtrage (6) dont l'extrémité inférieure (14) est dotée d'une coupelle de fond (20).

12. Installation selon la revendication 11 **caractérisée en ce que** ladite coupelle de fond (20) est munie d'une tige saillante (21) comportant un élément d'accrochage (22), lequel élément d'accrochage (22) est destiné à coopérer avec un profilé support (23) de conformation adaptée, aménagé au niveau de la structure support inférieure (12).

13. Installation selon la revendication 11 ou 12, **caractérisée en ce qu'**elle comporte une structure support inférieure (12) munie d'au moins un profilé support (23), en forme de tôle pliée, constitué d'une partie centrale (25) s'étendant à la verticale, et dont l'extrémité supérieure (26) est prolongée par un élément de retour (30) à l'équerre ou sensiblement à l'équerre, s'étendant sur toute sa longueur, lequel élément de retour (30) est muni de plusieurs fentes ouvertes (32) permettant chacune le passage d'une tige (21) d'accrochage de manche et le positionnement de l'élément d'accrochage (22) de ladite tige (21).

14. Installation selon la revendication 13, **caractérisée en ce qu'**elle comporte une structure support inférieure (12) munie d'au moins un profilé support (23), comportant un élément de retour supérieur (29) constitué de deux parties (30, 31) formant un dièdre, l'une desdites parties (30) s'étendant à l'équerre ou sensiblement à l'équerre à partir de l'extrémité supérieure (26) de la partie centrale (25), et l'autre desdites parties (31) étant inclinée vers le bas, lequel élément de retour (29) est muni d'une pluralité de fentes ouvertes (32) assurant le passage d'une tige (21) d'accrochage de manche, l'élément de crochet (22) étant destiné à venir se positionner sous ladite partie horizontale (30).

15. Outil de mise en tension d'une manche filtrante pour une installation de filtration d'air selon l'une quelconque des revendications 1 à 14, **caractérisé en ce qu'**il comporte:
- un élément d'embase (46),
- un moyen de traction (47) de l'extrémité supérieure (15) de la manche (6), adapté pour coopérer avec l'extrémité supérieure (15) de la manche (6) et qui comprend un organe de préhension (57) de la manche (6) au niveau de son extrémité supérieure (15),
- un moyen de manoeuvre (48) du moyen de traction (47).

16. Outil selon la revendication 15, **caractérisé en ce que** les moyens de manoeuvre (48) assistent mécaniquement le pilotage du moyen de traction (47).

17. Outil de mise en tension selon la revendication 16, **caractérisé en ce que** les moyens de manoeuvre (48) consistent en un dispositif de type ressort à gaz, vérin pneumatique ou hydraulique, lequel dispositif est agencé entre l'élément d'embase (46) et le moyen de traction (47) de façon à assister, lors de son déploiement, à manoeuvre dudit moyen de traction (47).

18. Outil selon l'une quelconque des revendications 15 à 17, **caractérisé en ce que** le moyen de traction (47) consiste en un élément en forme de U (65) destiné à venir se positionner sous un élément en forme de collet (36) aménagé au niveau de l'extrémité supérieure (15) des manches (6).

19. Procédé de montage d'une manche de filtrage (6) au sein d'une installation de filtration d'air selon l'une quelconque des revendications 1 à 14, **caractérisé en ce qu'**il consiste:
- à fixer l'extrémité inférieure (14) de la manche de filtrage (6), par le moyen de fixation bas (16), sur la structure support inférieure (12),
- à mettre en tension la manche de filtrage (6) par une traction verticale vers le haut, et
- à fixer l'extrémité supérieure (15) de la manche de filtrage (6) sur la structure support supérieure (13) par le moyen de fixation haut (17).

20. Manche filtrante (6) pour installation de filtration d'air selon l'une quelconque des revendications 1 à 14, **caractérisée en ce qu'**elle comporte un élément d'accrochage (22) à son extrémité inférieure (14), et un élément structurel (36) au niveau de son extrémité supérieure (15), destiné à faciliter sa préhension, ledit moyen de fixation haut (17) de ladite installation étant distinct dudit élément structurel (36).

21. Manche filtrante (6) selon la revendication 20 **caractérisée en ce que** ladite extrémité supérieure (15) est munie de deux collets rigides, l'un inférieur (35) et l'autrre supérieur (36), délimitant une portion d'extrémité supérieure (37) au niveau de laquelle est destinés à se positionner ledit moyen de fixation haut (17).

22. Manche filtrante (6) selon la revendication 20 ou 21, **caractérisée en ce que** ladite portion d'extrémité supérieure (37) est cylindrique ou est de forme générale tronconique.

## Patentansprüche

1. Luftfilteranlage, umfassend eine Filterpatrone (4) vom Typ mit Filterschläuchen (6), wobei die Schläuche (6) vertikal angeordnet sind und durch geeignete Mittel (16, 17) zwischen zwei Tragstrukturen (12, 13) gespannt gehalten werden, wobei das obere Ende (15) der Schläuche (6) an Öffnungen (40) befestigt ist, die in einer oberen Tragstruktur (13) in Form einer Platte mit Öffnungen vorgesehen sind, und wobei das untere Ende (14) der Schläuche (6) an einer unteren Tragstruktur (12) befestigt ist, **dadurch gekennzeichnet, dass** sie Mittel zur oberen und unteren Befestigung (16, 17) der Filterschläuche (6) umfasst, die derart ausgeführt sind, dass sie die folgende Montagekinematik ermöglichen:
- das untere Ende (14) jedes Schlauches (6) ist mit der unteren Tragstruktur (12) durch zugehörige untere Befestigungsmittel (16) verbunden;
- jeder Schlauch (6) wird dann durch einen vertikalen Zug nach oben, der auf ihr oberes Ende (15) ausgeübt wird, gespannt,
- der gespannte gehaltene Schlauch (6) wird schließlich mit einer der Öffnungen (40) der Platte (13) durch Aktivierung der zugehörigen oberen Befestigungsmittel (17) verbunden.

2. Anlage nach Anspruch 1, **dadurch gekennzeichnet, dass** die Schläuche (6) dicht mit der Platte mit Öffnungen verbunden sind.

3. Anlage nach einem der Ansprüche 1 und 2, **dadurch gekennzeichnet, dass** sie einen oberen Körper (1) umfasst, der mit einer tangentialen Zuleitung (2) der zu entstaubenden Luft versehen ist.

4. Anlage nach einem der Ansprüche 1 bis 3, **dadurch gekennzeichnet, dass** das obere Ende (15) der Schläuche (6) durch die Öffnungen (40) verläuft.

5. Anlage nach einem der Ansprüche 1 bis 4, **dadurch gekennzeichnet, dass** die Befestigungsmittel (16) zur Verbindung des unteren Endes (14) der Schläuche (6) derart ausgeführt sind, dass sie durch einen Bediener aktiviert werden können, der sich auf Höhe der oberen Tragstruktur (13) befindet.

6. Anlage nach einem der Ansprüche 1 bis 5, **dadurch gekennzeichnet, dass** sie Mittel (17) zur Befestigung der Filterschläuche (6) im Bereich der oberen Tragstruktur (13) vom Typ aufgesetztes Element (38) in Form eines verformbaren Ringes umfasst, wobei das aufgesetzte Element (38) dazu bestimmt ist, sich innerhalb der Schläuche (6) zu positionieren, wenn diese an der unteren Tragstruktur (12) befestigt und gespannt sind, so dass die Schläuche (6) in diesem gespannten Zustand durch Klemmen gegen die Kontur (41) der Öffnungen (40) der oberen Tragstruktur (13) gehalten werden.

7. Anlage nach Anspruch 6, **dadurch gekennzeichnet, dass** der verformbare Ring (38) eine Ringnut (39) umfasst, die auf seiner äußeren Kontur vorgesehen und dazu bestimmt ist, sich auf in innere Kontur (41) der Öffnungen (40) der oberen Struktur (13) einzufügen.

8. Anlage nach einem der Ansprüche 6 oder 7, **dadurch gekennzeichnet, dass** sie Filterschläuche (6) umfasst, deren oberes Ende (15) mit einem Strukturelement (36) versehen ist, das dazu bestimm ist, ihr Ergreifen manueller oder mechanischer Art, insbesondere um ihre Spannung zu gewährleisten, zu erleichtern.

9. Anlage nach Anspruch 8, **dadurch gekennzeichnet, dass** sie Filterschläuche (6) umfasst, deren oberes Ende (15) mit einem Element in Form eines starren Flansches (36) versehen ist, das dazu bestimmt ist, ihr Ergreifen, insbesondere um ihre Spannung zu gewährleisten, zu erleichtern.

10. Anlage nach Anspruch 9, **dadurch gekennzeichnet, dass** sie Filterschläuche (6) umfasst, deren oberer Endabschnitt (37), der von zwei starren Flanschen (35 und 36) begrenzt ist, eine allgemeine kegelstumpfartige Form aufweist, wobei der Durchmesser des starren Endflansches (36) größer als der Durchmesser der Öffnungen (40) der Platte (13) ist.

11. Anlage nach einem der Ansprüche 1 bis 10, **dadurch gekennzeichnet, dass** sie Filterschläuche (6) umfasst, deren unteres Ende (14) mit einem Bodenteller (20) versehen ist.

12. Anlage nach Anspruch 11, **dadurch gekennzeichnet, dass** der Bodenteller (20) mit einer herausragenden Stange (21) versehen ist, umfassend ein Befestigungselement (22), wobei das Befestigungselement (22) dazu bestimmt ist, mit einem Tragprofil (23) von entsprechender Ausführung zusammenzuwirken, das auf Höhe der unteren Tragstruktur (12) vorgesehen ist.

13. Anlage nach Anspruch 11 oder 12, **dadurch gekennzeichnet, dass** sie eine untere Tragstruktur (12) umfasst, die mit mindestens einem Tragprofil (23) in Form eines Falzbleches versehen ist, das aus einem zentralen Teil (25) besteht, der sich in der Vertikalen erstreckt und dessen oberes Ende (26) durch ein Rückführungselement (30) im rechten Winkel oder im Wesentlichen im rechten Winkel verlängert ist, das sich über seine gesamte Länge erstreckt, wobei das Rückführungselement (30) mit mehreren offenen Schlitzen (32) versehen ist, die jeweils den Durchgang einer Stange (21) zur Befestigung eines Schlauches und die Positionierung des Befestigungselements (22) der Stange (21) ermöglichen.

14. Anlage nach Anspruch 13, **dadurch gekennzeichnet, dass** sie eine untere Tragstruktur (12) umfasst, die mit mindestens einem Tragprofil (23) versehen ist, umfassend ein oberes Rückführungselement (29), das von zwei Teilen (30, 31) gebildet ist, die einen Dieder bilden, wobei sich einer der Teile (30) im rechten Winkel oder im Wesentlichen im rechten Winkel von dem oberen Ende (26) de zentralen Teils (25) aus erstreckt, und wobei der andere der Teile (31) nach unten geneigt ist, wobei das Rückführungselement (29) mit einer Vielzahl von offenen Schlitzen (32) versehen ist, die den Durchgang einer Stange (21) zur Befestigung eines Schlauches gewährleisten, wobei das Hakenelement (22) dazu bestimmt ist, unter dem horizontalen Teil (30) angeordnet zu werden.

15. Werkzeug zur Unterspannungsetzung eines Filterschlauches für eine Luftfilteranlage nach einem der Ansprüche 1 bis 14, **dadurch gekennzeichnet, dass** es umfasst:
- ein Basiselement (46),
- ein Zugelement (47) für das obere Ende (15) des Schlauches (6), das dazu vorgesehen ist, mit dem oberen Ende (15) des Schlauches (6) zusammenzuwirken, und das ein Greifelement (57) für den Schlauch (6) im Bereich seines oberen Endes (15) umfasst,
- ein Betätigungselement (48) des Zugmittels (47).

16. Werkzeug nach Anspruch 15, **dadurch gekennzeichnet, dass** die Betätigungsmittel (48) mechanisch die Steuerung des Zugelements (47) unterstützen.

17. Werkzeug zur Unterspannungsetzung nach Anspruch 16, **dadurch gekennzeichnet, dass** die Betätigungsmittel (48) in einer Vorrichtung vom Typ Gasfeder, Druckluftzylinder oder Hydraulikzylinder bestehen, wobei die Vorrichtung zwischen dem Basiselement (46) und dem Zugelement (47) angeordnet ist, um, wenn sie ausgefahren wird, die Betätigung des Zugelements (47) zu unterstützen.

18. Werkzeug nach einem der Ansprüche 15 bis 17, **dadurch gekennzeichnet, dass** das Zugelement (47) in einem U-förmigen Element (65) besteht, das dazu bestimmt ist, sich unter einem Element in Form eines Flansches (36) zu positionieren, das im Bereich des oberen Endes (15) der Schläuche (6) angeordnet ist.

19. Verfahren zur Montage eines Filterschlauches (6) in einer Luftfilteranlage nach einem der Ansprüche 1 bis 14, **dadurch gekennzeichnet, dass** es darin besteht:
- das untere Ende (14) des Filterschlauches (6) durch das untere Befestigungsmittel (16) auf der unteren Tragstruktur (12) zu befestigen,
- den Filterschlauch (6) durch einen vertikalen Zug nach oben unter Spannung zu setzen, und
- das obere Ende (15) des Filterschlauches (6) auf der oberen Tragstruktur (13) durch das obere Befestigungsmittel (17) zu befestigen.

20. Filterschlauch (6) für eine Luftfilteranlage nach einem der Ansprüche 1 bis 14, **dadurch gekennzeichnet, dass** er ein Befestigungselement (22) an seinem unteren Ende (14) und ein Strukturelement (36) im Bereich seines oberen Endes (15) umfasst, das dazu bestimmt ist, sein Ergreifen zu erleichtern, wobei sich das obere Befestigungselement (17) der Anlage von dem Strukturelement (36) unterscheidet.

21. Filterschlauch (6) nach Anspruch 20, **dadurch gekennzeichnet, dass** das obere Ende (15) mit zwei starren Flanschen, einem unteren (35) und einem oberen (36), versehen ist, die einen oberen Endabschnitt (37) begrenzen, in dessen Bereich das obere Befestigungsmittel (17) positioniert werden soll.

22. Filterschlauch (6) nach Anspruch 20 oder 21, **dadurch gekennzeichnet, dass** der obere Endabschnitt (37) zylindrisch oder von allgemeiner kegelstumpfartiger Form ist.

## Claims

1. An air filtration plant, comprising a filter cartridge (4) being of the type comprising filter sleeves (6), which sleeves (6) are arranged vertically, and held stretched by appropriate means (16, 17) between two supporting structures (12, 13), the upper end (15) of said sleeves (6) being attached to openings (40) provided in an upper supporting structure (13) in the form of a plate fitted with openings, and the lower end (14) of said sleeves (6) being attached to a lower supporting structure (12), **characterised in that** it includes upper and lower fastening means (16, 17) of the filter sleeves (6) which are suited to enable the following cinematic assembly:
- the lower end (14) of each sleeve (6) is interconnected with the lower supporting structure (12) by dint of the associated upper fastening means (16);
- each sleeve (6) is then tensioned by a vertical upward traction exerted on its upper end (15),
- the sleeve (6) held stretched is finally interconnected with one of the openings (40) of the plate (13) by actuating the associated lower fastening means (17).

2. The plant according to claim 1, **characterized in that** the sleeves (6) are interconnected to ensure efficient tightness between said sleeves (6) and the plate fitted with openings.

3. The plant according to any one of claims 1 and 2, **characterized in that** it includes an upper body (1) fitted with a tangential supply (2) of the air to be de-dusted.

4. The plant according to any one of claims 1 to 3, **characterized in that** the upper end (15) of the sleeve (6) passes through the opening assembly (40).

5. The plant according to any one of claims 1 to 4, **characterized in that** the fastening means (16), for interconnection of the lower end (14) of the sleeves (6), are adapted for being activated by an operator located at the upper supporting structure (13).

6. The plant according to any one of claims 1 to 5, **characterised in that** it includes means (17) for fastening the filter sleeves (6) at the upper supporting structure (13), of add-on member (38) type in the form of a ductile ring, which add-on member (38) is designed for being located within said sleeves (6) once the latter have been attached to the lower supporting structure (12), and stretched, so as to hold said sleeves (6) in this stretched condition by clamping against the contour (41) of the openings (40) of said upper supporting structure (13).

7. The plant according to claim 6, **characterised in that** the ductile ring (38) includes an annular groove (39), provided on the external contour thereof, intended for being embedded on the internal contour (41) of the openings (40) of the upper structure (13).

8. The plant according to claim 6 or 7, **characterised in that** it includes the filter sleeves (6) whereof the upper end (15) is fitted with a structural element (36) for easier gripping thereof, manually or mechanically, in particular for a reliable tension thereof.

9. The plant according to claim 8, **characterised in that** it includes the filter sleeves (6) whereof the upper end (15) is fitted with an element in the form of a rigid collar (36) for easier gripping thereof in particular for a reliable tension thereof

10. The plant according to claim 9, **characterised in that** it includes the filter sleeves (6) whereof the upper end portion (37), delineated by two rigid collars (35 and 36), is generally shaped as a truncated cone, the diameter of the end rigid collar (36) being greater than the diameter of the openings (40) of the plate (13).

11. The plant according to any one of claims 1 to 10, **characterised in that** it includes the filter sleeves (6) whereof the lower end (14) is provided with a bottom cup (20).

12. A plant according to claim 11, **characterised in that** the bottom cup is fitted with a protruding rod (21) comprising a catching element (22), which catching element (22) is designed for co-operating with a supporting profile (23) of matching shape, provided at the lower supporting structure (12).

13. A plant according to claim 11 or 12, **characterised in that** it includes a lower supporting structure (12) fitted with at least one supporting profile (23), in the form of folded sheet metal, formed of a central part (25) extending vertically, and whereof the upper end (26) is extended by a return element (30) at right angle or substantially at right angle, extending over the whole length thereof, which return element (30) is fitted with several open slots (32) each letting through a rod (21) for catching a sleeve and locating the catching element (22) of said rod (21).

14. The plant according to claim 13, **characterised in that** it includes a lower supporting structure (12) fitted with at least one supporting profile (23), comprising an upper return element (29) formed of two parts (30, 31) forming a dihedron, one of said parts (30) extending at right angle or substantially at right angle from the upper end (26) of the central part (25), and the other of said parts (31) being tilted downwards, which return element (29) is fitted with a plurality of open slots (32) letting through a rod (21) for catching a sleeve, the hooking element (22) being designed for a location beneath said horizontal part (30).

15. A tensioning tool for a filter sleeve for an air filtration plant according to any one of claims 1 to 14, **characterised in that** it includes:
- a seating element (46),
- a means (47) for stretching the upper end (15) of the sleeve (6), adapted for co-operating with the upper end 15 of a sleeve 6, and that includes a gripping member (57) of the sleeve (6) at its upper end (15), and
- a means (48) for manoeuvring the stretching means (47).

16. The tool according to claim 15, **characterised in that** the manoeuvring means (48) assist mechanically the driving of the stretching means (47).

17. The tensioning tool according to claim 16, **characterised in that** the manoeuvring means (48) consist of at least one gas, pneumatic or hydraulic jack-operated device, which device is arranged between the seating element (46) and the stretching means (47) so as to facilitate, during the deployment thereof, the maneuver of said stretching means (47).

18. The tool according to any one of claims 15 to 17, **characterised in that** the stretching means (47) consist of a U-shaped element (65) intended for location beneath an element in the form of a collar (36) provided at the upper end (15) of the sleeves (6).

19. A process for assembling a filter sleeve (6) within an air filtration plant according to any one of claims 1 to 14, **characterised in that** it consists:
- in attaching the lower end (14) of the filter sleeve (6), via an lower fastening means (16), to the lower supporting structure (12),
- in tensioning the filter sleeve (6) by a vertical upward traction, and
- in attaching the upper end (15) of the filter sleeve (6) to the upper supporting structure (13) via an upper fastening means (17).

20. A filter sleeve for an air filtration plant according to any one of claims 1 to 14, **characterised in that** it includes a hooking member (22) at the lower end thereof (14), and a structural element (36) at the upper end thereof (15), for easier gripping thereof, the upper fastening means (17) of said plant being independent from said structural element (36).

21. The filter sleeve according to claim 20, **characterised in that** the upper end (15) is fitted with two rigid collars, one lower (35) and the other upper (36), delineating an upper end portion (37), at which the upper fastening means (17) are intended for location.

22. The filter sleeve according to claim 20 or 21, **characterised in that** said upper end portion (37) is cylindrical or generally shaped as a truncated cone.
